# EUROPEAN PATENT SPECIFICATION

(11) **EP 2 934 170 B1**
(45) Date of publication and mention of the grant of the patent: **17.05.2017**
(21) Application number: 13817735.7
(22) Date of filing: 04.12.2013
(51) Int. Cl.: A23G 3/34, A23G 9/32, A21D 13/00

(54) **ICING OR COATING COMPOSITION**
VEREISUNGS- ODER BESCHICHTUNGSZUSAMMENSETZUNG
COMPOSITION DE GLAÇAGE OU D'ENROBAGE

(30) Priority: 24.12.2012 US 201213726529
(43) Date of publication of application: 28.10.2015
(60) Divisional application: 17159398.1
(73) Proprietor: Loders Croklaan B.V., 1521 AZ Wormerveer (NL)
(72) Inventor: MCNEILL, Gerald Patrick, Channahon, Illinois 60410-5249 (US); HERZING, Anthony George, deceased (US); STUDENKA, Donna Cindy, Channahon, Illinois 60410-5249 (US)
(74) Representative: Potter Clarkson LLP
(86) International application number: PCT/IB2013/060634
(87) International publication number: WO 2014/102634

(56) References cited:
- WO-A1-95/31110
- WO-A1-2006/133124
- WO-A1-2007/021899
- WO-A1-2008/064962
- WO-A1-2009/012888
- WO-A2-96/10338
- CA-C- 1 329 509
- US-A- 5 874 117
- US-B2- 7 645 473

## Description

This invention relates to an icing or coating composition for edible products such as baked goods including snack items such as biscuits, cookies and cakes.

A coating or icing is sometimes applied to food products such as sugar-containing baked goods. The coating or icing is often a mixture comprising fat and sugar. Chocolate-like coatings and icings typically also contain cocoa powder to give the colour and taste of chocolate.

There is a desire amongst many consumers to reduce the quantity of saturated fat in the diet. However, since saturated fat contributes to the physical and organoleptic properties of the coating or icing, replacing saturated fat can be technically challenging. This is particularly so when an icing or coating must meet other requirements such as setting relatively quickly and remaining flexible so that the icing or coating does not crack when the iced or coated product is subjected to minor mechanical shock during handling or transport.

US 7,645,473 discloses a vegetable fat composition that can be used in an icing composition for baked goods. The presence of a liquid oil is optional and in the examples 36 % liquid oil is used in the composition.

WO 2004/112492 describes a process for the production of a fat composition suitable for use as a confectionery fat, wherein a starting fat composition which contains between 20 and 95wt% of S2U, less than 75wt% of SU2+U3, less than 20wt% of S3 between 1 and 12wt% of diglycerides, between 10 and 100 wt% of at least one interesterified fat, the interesterified fat containing less than 15wt% of C-12 with respect to the total amount of interesterified fat, is subjected to a catalytic hydrogenation so as to obtain a first fat and in that the first fat is incorporated in the fat composition.

US 2008/0206413 describes a puff pastry preparation containing a fat which principally comprises palm olein, preferably interesterified.

WO 2009/012888 also relates to a laminating fat for use in dough such as puff pastry.

WO 2008/064962 describes an ice confection having an ice confection core and a snappy outer compound coating layer that has a reduced saturated fatty acid content.

The fat in the compound coating is a mixture of fractionated palm oil and a liquid oil such as canola oil, sunflower oil, soybean and corn oils.

WO 96/10338 relates to flexible ice-cream coating compositions obtained by using as fat for the fat phase a triglyceride-composition, comprising: < 8 wt.% of SSS; 25 - 80 wt.% of SUS; 2 - 40 wt.% of SU2; and > 5 wt.% of U3; where: S = saturated fatty acid C16-C24; and U = unsaturated fatty acid C18+.

WO 2007/021899 discloses edible oil blends which have a desired fatty acid profile, such as a desired oleic acid content, a desired polyunsaturated fatty acid content, a desired linoleic acid content, or a desired linolenic acid content. Edible oil blends which are virtually trans free are also disclosed. The edible oil blends typically comprise a first edible oil and a second edible oil, where the first edible oil is a high oleic canola oil, and the second, third, or additional edible oil is selected from canola oil, corn oil, cottonseed oil, safflower oil, soybean oil, extra virgin olive oil, sunflower oil, palm oil, MCT oil, and trioleic oil.

WO 2006/133124 describes improvements in puff pastry preparation, which reduce, and preferably eliminate, trans unsaturated fatty acids by the use of a new puff pastry fat comprised principally of palm olein, which is preferably interesterified. The puffed pastry fats exhibit low levels of trans fatty acids. The puff pastry fats and products are said to be functional without resort to high solids contents, hydrogenation or butter or other animal fats.

There remains a need for icing and coating compositions that have a low saturated fatty acid (SAFA) content but that can provide an organoleptically acceptable, flexible coating for edible products having an acceptable setting time, particularly for baked goods including baked confectionery snack items such as biscuits, cookies and cakes.

According to the invention, there is provided an icing or coating composition as defined in the appended Claim 1.

Also provided by the invention is an iced or coated edible product as defined in the appended Claim 11.

A further aspect of the invention is the use of a composition as defined in the appended Claim 12.

In another aspect, the invention provides a method of making an icing or coating composition as defined in the appended Claim 13.

In yet another aspect, the invention provides a method of forming an icing or coating on an edible product as defined in the appended Claim 14.

In addition to providing a flexible coating for edible products, the invention involves a reduction the saturated fatty acid (SAFA) content of an icing or coating composition. Preferably, the saturated fatty acid (SAFA) content of the composition is less than 43 % by weight, such as from 35 to 40 % by weight, based on the total C12 to C24 fatty acids present. It will be appreciated that the SAFA content is based on the fatty acids that are present as fatty acyl groups in glycerides in the composition and in the fat blend it contains.

The monounsaturated fatty acid (MUFA) content of the fat blend is preferably in the range of from 42 to 50 % by weight based on the total C12 to C24 fatty acids present. The polyunsaturated fatty acid (PUFA) content of the fat blend is preferably from 10 to 20 % by weight based on the total C12 to C24 fatty acids present. Again, these are based on the fatty acids that are present as fatty acyl groups in glycerides in the composition and in the fat blend it contains.

The fat blend comprises from 12 to 25 % by weight SOO and from 7 to 15% SOL based on the total weight of triglycerides present in the fat blend. S is saturated fatty acid having 12 to 24 carbon atoms, O is oleic acid and L is linoleic acid. SOO refers to a triglyceride having S at the 1- position and O at the 2- and 3- positions of the glycerol moiety. SOL refers to a triglyceride having S at the 1- position, O at the 2- position and L at the 3- position of the glycerol moiety. Those skilled in the art will understand that the numbering of the 1- and 3- positions may be exchanged.

Preferably, the fat blend comprises from 14 to 20 % by weight SOO based on the total weight of triglycerides present. Additionally or alternatively, the fat blend may comprise 8 to 14 % by weight SOL based on the total weight of triglycerides present.

The fat blend of the invention consists of from 10 to 25 % by weight of a liquid oil and from 75 to 90 % by weight of a palm oil olein or from 12 to 20 % by weight liquid oil and from 80 to 88 % by weight palm oil olein.

Palm oil olein is obtained as a lower melting point fraction by the fractionation of palm oil. Fractionation of fats and oils into higher and lower melting fractions is a technique that is well-known to those skilled in the art. The higher melting fraction is usually termed a stearin and the lower melting fraction is usually called an olein. Fractionation may be carried out in the presence of a solvent (wet) or without a solvent (dry).

The palm oil olein is interesterified. Interesterification randomises the fatty acid residues in the glycerides. Interesterification may be carried out chemically using catalysts, such as bases (e.g., sodium methoxide) or enzymatically using a lipase. Preferably, the palm oil olein is chemically interesterified.

The interesterified palm oil olein preferably has an iodine value (IV) of from 45 to 65. The palm oil olein will have the same, or substantially the same, IV before interesterification. Iodine value may be determined by AOCS Cd 1d-92.

Liquid oils are vegetable oils that are liquid at room temperature (20 °C). The liquid oil consists of canola oil.

The physical properties of fats are sometimes defined in terms of N values. These indicate the percentage of solid fat in the composition at a given temperature. Thus, the term Nx refers to solid fat content at a temperature of x °C, measured by NMR pulse techniques. Methods for determining N values are NEN-ISO method 8292-1 or AOCS Cd 16b-93.

The fat blend of the invention preferably has one or more of the following N-values:
N10 of greater than 35, more preferably from 38 to 50
N20 of greater than 20, more preferably 20 to 30,
N25 of less than 16, more preferably less than 15 and
N30 of less than 12, more preferably less than 10.

Preferably, the fat blend has an N10 of greater than 35, an N20 of greater than 20, an N25 of less than 16 and an N30 of less than 12.

Preferably, the fat blend comprises palmitic acid in an amount of greater than 32 % and/or stearic acid in an amount of from 3.5 to 5 %, based on the total C12 to C24 fatty acids present.

The term fatty acid, as used herein, refers to straight chain saturated or unsaturated (including mono- and poly- unsaturated) carboxylic acids having from 12 to 24 carbon atoms. The term is used herein to refer to the carboxylic acid residues bound to the glycerol moiety as acyl groups in glycerides. The fat blend preferably comprises at least 95 % by weight fatty acids, more preferably at least 98% fatty acids, based on total carboxylic acids present as acyl groups.

The fat blend used in the composition of the invention preferably comprises palmitic, stearic, oleic and linoleic acids in an amount of at least 85 % by weight, more preferably at least 90 % by weight, based on the total fatty acids present in the fat blend.

The fat blend preferably comprises linolenic acid in an amount of less than 3 % by weight, more preferably less than 2 % by weight based on total fatty acids present in the fat blend.

The fat blend used in the composition of the invention preferably contains less than 2 % by weight of arachidic and behenic acid residues based on total fatty acids present in the fat blend. More preferably, the fat blend contains less than 1 % by weight of arachidic and behenic acid residues based on total fatty acids present in the fat blend.

The fat blend preferably has at least 80 %, more preferably at least 85 %, by weight of triglycerides having carbon numbers of 50, 52 and 54. Preferably, at least 90 %, more preferably at least 95 % by weight of the triglycerides in the fat blend have carbon numbers of 48, 50, 52 and 54. It is thus preferred that less than 10 %, more preferably, less than 5 %, by weight of the triglycerides in the fat blend have a carbon number of 46 or less. Preferably, less than 9 %, more preferably less than 8 %, by weight of the triglycerides in the fat blend have a carbon number of 48. Carbon number is the total number of carbon atoms from fatty acids in a triglyceride - for example, tripalmitin (tripalmitoyl glycerol) will have a carbon number of 3 x 16 = 48.

The fat blend of the invention has not undergone hydrogenation. Thus, the fat blend is non-hydrogenated. The fat blend is therefore substantially free of trans fatty acids i.e., it contains less than 1 %, more typically less than 0.8 %, by weight trans fatty acids based on the total fatty acids present in the fat blend.

The fat blend preferably has an iodine value (IV) of from 55 to 75. Again, iodine value may be determined by AOCS Cd 1 d-92.

The icing or coating composition of the invention comprises sugar. Sugars include, for example, sucrose, glucose, fructose and mixtures thereof. The sugar is typically sucrose. The sugar is preferably powdered.

Preferably, the sugar is present in the composition of the invention in an amount of from 30 to 70 % by weight, more preferably from 40 to 60 % by weight, even more preferably from 45 to 55 % by weight, based on the weight of the composition.

The composition of the invention preferably comprises the fat blend in an amount of from 20 to 45 % by weight, such as from 30 to 35 % by weight.

The compositions of the invention optionally comprise, in addition to the fat blend and the sugar, one or more components selected from flavourants, emulsifiers and colourants. Typically, these components will be present in an amount of up to 20 % by weight of the composition. Examples of flavourants and colourants include cocoa powder, non-fat dry milk (NFDM) powder and vanillin. Lecithin is a preferred emulsifier and is preferably present in an amount of up to 1 % by weight of the composition, such as from 0.1 to 1 % by weight. It is preferred that the composition comprises cocoa powder, more preferably in an amount of up to 15 % by weight of the composition, such as from 1 to 15 % by weight.

It will be appreciated that the percentage amounts of all of the components in the composition of the invention will add up to 100 %.

The compositions are typically used to apply an icing or a partial or complete coating to a base product which is preferably a baked product, more preferably a baked confectionery product. An icing will usually be applied to the top of the base product, whereas a coating will usually be applied to all, or substantially all, of the base product. Baked products are typically baked in an oven. Examples of baked confectionery products include biscuits, cookies and cakes. Cupcakes are particularly preferred examples of baked confectionery products for the invention.

One preferred embodiment of a composition of the invention is an icing or coating composition for edible products comprising from 30 to 70 % by weight sugar and from 20 to 45 % by weight of a fat blend, wherein the fat blend wherein the fat blend comprises from 14 to 20 % by weight SOO and from 7 to 15% SOL based on the total weight of triglycerides present and the fat blend has a saturated fatty acid content of less than 43 % by weight based on the total C12 to C24 fatty acids present and a monounsaturated fatty acid content in the range of from 42 % to 50 % by weight based on the total C12 to C24 fatty acids present,and wherein S is saturated fatty acid having 12 to 24 carbon atoms, O is oleic acid and L is linoleic acid, and the fat blend has an N30 of less than 12.

Another preferred embodiment of a composition of the invention is an icing or coating composition for baked confectionery products comprising from 30 to 70 % by weight sugar, from 20 to 45 % by weight of a fat blend, from 0.1 to 1 % by weight lecithin and from 1 to 15 % by weight cocoa powder, wherein the fat blend wherein the fat blend comprises from 14 to 20 % by weight SOO and from 8 to 14 % SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid and the fat blend comprises from 10 to 25 % by weight of a liquid oil comprising canola oil and from 75 to 90 % by weight of an interesterified palm oil olein having an IV of from 45 to 65.

A further preferred embodiment of a composition of the invention is an icing or coating composition for baked confectionery products comprising from 40 to 60 % by weight sugar, from 20 to 45 % by weight of a fat blend and from 1 to 15 % by weight cocoa powder, wherein the fat blend wherein the fat blend comprises from 12 to 25 % by weight SOO and from 7 to 15% SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid and the fat blend consists of from 10 to 25 % by weight of canola oil and from 75 to 90 % by weight of an interesterified palm oil olein.

The method of the invention for making an icing or coating composition of the invention preferably comprises mixing the sugar and the fat blend at a temperature of from 45 to 100 °C and refining the mixture. Typically, at least a portion of the fat blend is melted and added to at least the particulate ingredients (such as sugar, cocoa powder and milk powder) with stirring. The resulting mixture is then subjected to a refining step. Refining is a term that is well-known to those skilled in the art and refers to reducing the particle size of the particulates present in a composition so as to improve mouthfeel, by avoiding a gritty texture. In the refining step, the particle size of the sugar and any other particulate components is reduced. A suitable refiner is a 3-roll refiner. Any remaining non-particulate ingredients (such as emulsifier) are preferably then added together with any remaining fat. The resulting mixture is preferably mixed for around 5 minutes to 2 hours.

The method of applying an icing or coating to an edible product according to the invention comprises applying the composition of the invention to the base edible product at a temperature of from 40 to 60 °C. The composition is typically applied by dipping or coating onto the edible product. Preferably, the composition is applied in a continuous process to individual items of the edible product on a conveyor, such as a conveyor belt. The coated or iced product is then cooled. A typical rate of passage of the conveyor is less than 1.1 m per minute.

It will be appreciated that the icing or coating composition of the invention should exhibit no noticeable flow at temperatures of 25 °C over a time of up to 48 hours.

The following non-limiting examples illustrate the invention and do not limit its scope in any way. In the examples and throughout this specification, all percentages, parts and ratios are by weight unless indicated otherwise.

### EXAMPLES

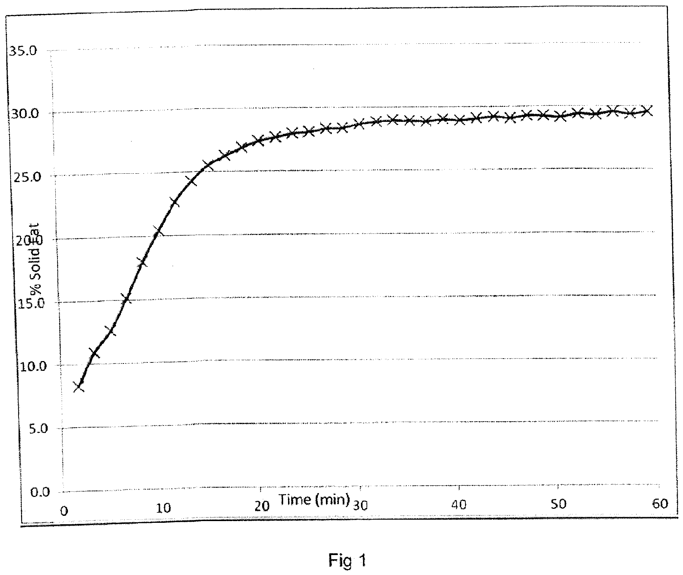

Figure 1 shows a crystallization curve for the fat blend of Example 1.

### Example 1

### Example 1A - Fat Blend

A fat blend was prepared by blending 84 % by weight of chemically interesterified palm oil olein having an iodine value (IV) of 55 (Sans Trans HF from Loders Croklaan USA LLC) with 16 % by weight canola oil.

The following analytical results were obtained for the fat blend:

| | |
|---|---|
| **IV** | 65.1 |
| **Melting point (°C)** | 38.4 |
| **N10** | 40.9 |
| **N20** | 22.4 |
| **N25** | 14.9 |
| **N30** | 9.4 |
| **N35** | 5.1 |
| **N40** | 3.3 |
| **FFA*** | 0.04 |
| **PV**** | 1.3 |
| **SAFA** | 39.4 |
| **MUFA** | 46.2 |
| **PUFA** | 13.8 |
| **TRANS** | 0.7 |

| | |
|---|---|
| * free fatty acids; ** peroxide value | |

The fatty acid composition was determined as follows:

| | | | |
|---|---|---|---|
| **C6:0** | 0.0 | **C32** | 0.0 |
| **C8:0** | 0.0 | **C34** | 0.0 |
| **C10:0** | 0.0 | **C36** | 1.4 |
| **C12:0** | 0.3 | **C38** | 1.0 |
| **C14:0** | 0.9 | **C40** | 0.0 |
| **C16:0** | 33.8 | **C42** | 0.0 |
| **C16:1** | 0.2 | **C44** | 0.0 |
| **C17:0** | 0.1 | **C46** | 1.0 |
| **C18:0** | 3.9 | **C48** | 7.8 |
| **C18:1t** | 0.0 | **C50** | 26.1 |
| **C18:1c** | 45.7 | **C52** | 35.5 |
| **C18:2t** | 0.4 | **C54** | 27.2 |
| **C18:2c** | 12.2 | **Total** | 100.0 |
| **C18:3t** | 0.3 | | |
| **C18:3c** | 1.6 | | |
| **C20:0** | 0.3 | | |
| **C20:1** | 0.3 | | |
| **C22:0** | 0.1 | | |
| **C22:1** | 0.0 | | |
| **C24:0** | 0.1 | | |
| **Total** | 100.0 | | |

A crystallization curve for the fat blend is shown in Figure 1.

The fat blend contained the following triglycerides:

| | % |
|---|---|
| SOS | 6.4 |
| SOO | 16.9 |
| OSO | 8.63 |
| SSS | 9.8 |
| SLS | 1.8 |
| SSL | 4.7 |
| SOL | 9.8 |
| OOO | 12.9 |
| 3plus* | 14.1 |
| SSO | 14.9 |

| | |
|---|---|
| * triglycerides having 3 or more double bonds | |

### Example 1B - Coating Formulation

A coating formulation was prepared from the fat blend as follows:

**Coating Formula:**

| **Example 1** | | | 1200 |
|---|---|---|---|
| **Ingredient** | **Supplier** | **%** | **weight (g)** |
| Powdered Sugar | Milliana | 48.0 | 576.0 |
| Teton Cocoa powder | Blommer | 4.5 | 54.0 |
| Natural Cocoa Powder | Barry Callebaut | 4.5 | 54.0 |
| High Heat NFDM Powder | Dawn | 9.0 | 108.0 |
| Fat blend - Example 1A | | 33.5 | 402.0 |
| Lecithin | Loders Croklaan | 0.45 | 5.4 |
| E. Vanillin | Rhodia | 0.05 | 0.6 |
| TOTAL | | 100.0 | 1200.0 |

The coating was prepared according to the following protocol:
1.) Turn on water bath temperature on the mixer and set at 150 to 160 °F (65 to 70 °C)
2.) Weigh out the sugar, cocoa powder and milk powder together in a Hobart bowl, and then blend for 5 minutes, on 1st speed.
3.) Add approximately one half of the melted fat until the mixture just comes together, but not wet, paste-like. Turn off the mixer.
4.) Take the mixture to the refiner and run once through the 3 roll refiner.
5.) Place refined mass in a clean Hobart bowl and add the E. vanillin, lecithin, and about one half of the remaining fat to the mass.
6.) Mix on 1 st speed for 3 to 5 minutes, then stop the mixer, scrape the bowl and change to 2nd speed.
7.) Mix on 2nd speed for 5 minutes or until the mixture is smooth. Stop mixer. Scrape bowl and change back to 1 st speed.
8.) Add the remaining fat and mix until desired "conching" effect is achieved. Conching time is usually from 30 to 60 minutes.

### Example 2

The coating composition was applied to cupcakes in a cooling tunnel.
- The speed of the cooling tunnel was measured using a tachometer.
- The length of the cooling is 19.7 ft (6 m).
- The fastest speed of the belt is 6.6ft/min (2 m/min), or 3 minutes in the tunnel.
- The cooling tunnel has 3 temperature zones; for this experiment, all zones were set at the same temperature, 40-42F (4-6 °C).
- Fans/wind speed set at 10/8/10, respectively in zones 1, 2, and 3.
- The coating was heated to 115 °F (46.1 °C).
- Mini cupcake tops were dipped in the coating and shaken for 5 seconds and placed onto the cooling tunnel belt.

The first cupcakes were tacky, still slightly wet at the end of the tunnel with a belt speed of 4.2ft /min (1.28 m/min) or 4.6 minutes in the cooling tunnel.

The belt speed was reduced to 3.6ft /min (1.1 m/min) or 5.5 minutes in the tunnel and the cupcakes were slightly tacky.

Again, the belt speed was reduced to 3.5ft /min (1.07 m/min) or 5.6 minutes in the tunnel and coating was set, not tacky.

| | | |
|---|---|---|
| 4.2ft/min (1.28 m/min) | 3.6ft/min (1.1 m/min) | 3.5ft/min (1.07 m/min) |
| 4.6 min | 5.5 min | 5.6 min |
| Slightly wet/ tacky | Slightly tacky | Coating set |

## Claims

1. An icing or coating composition for edible products comprising at least 30 % by weight sugar and at least 20 % by weight of a fat blend, wherein the fat blend comprises from 12 to 25 % by weight SOO and from 7 to 15% by weight SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid, and the fat blend consists of from 10 to 25 % by weight of canola oil and from 75 to 90 % by weight of an interesterified palm oil olein.

2. Composition as claimed in Claim 1, wherein the fat blend comprises from 14 to 20 % by weight SOO based on the total weight of triglycerides present.

3. Composition as claimed in Claim 1 or Claim 2 wherein the saturated fatty acid (SAFA) content of the composition is less than 40% by weight.

4. Composition as claimed in any one of the preceding claims, wherein the fat blend has one or more of: an N10 of greater than 35, an N20 of greater than 20, an N25 of less than 16 and an N30 of less than 12.

5. Composition as claimed in any one of the preceding claims, wherein the fat blend has an N20 of from 20 to 30.

6. Composition as claimed in any one of the preceding claims wherein the fat blend comprises palmitic acid in an amount of greater than 32 % by weight and stearic acid in an amount of from 3.5 to 5 % by weight, based on the total C12 to C24 fatty acids present.

7. Composition as claimed in any one of the preceding claims wherein the sugar is present in the composition in an amount of from 30 to 70 % by weight.

8. Composition as claimed in any one of the preceding claims wherein the fat blend is present in the composition in an amount of from 20 to 45 % by weight.

9. Composition as claimed in any one of the preceding claims which further comprises cocoa powder.

10. Composition as claimed in any one of the preceding claims, wherein the palm oil olein has an iodine value (IV) of from 45 to 65.

11. An iced or coated edible product comprising a base product and an icing or coating, wherein the icing or coating is a composition as defined in any one of Claims 1 to 10, and wherein the edible product is preferably a baked confectionery product, for example selected from biscuits, cookies and cakes.

12. Use of a composition as defined in any one of Claims 1 to 10 as an icing or coating on an edible product, and wherein the edible product is preferably a baked confectionery product, for example selected from biscuits, cookies and cakes.

13. Method of making an icing or coating composition as defined in any one of Claims 1 to 10, which comprises mixing the sugar and the fat blend at a temperature of from 45 to 100 °C and refining the mixture.

14. Method of forming an icing or coating on an edible product which comprises applying to the edible product the composition of any one of Claims 1 to 10 at a temperature of from 40 to 60 °C.

## Patentansprüche

1. Glasur- oder Überzugzusammensetzung für essbare Produkte, umfassend wenigstens 30 Gew.-% Zucker und wenigstens 20 Gew.-% einer Fettmischung, wobei die Fettmischung 12 bis 25 Gew.-% SOO und 7 bis 15 Gew.-% SOL bezogen auf das Gesamtgewicht von vorhandenen Triglyceriden umfasst und die Fettmischung einen Gehalt von gesättigter Fettsäure von weniger als 45 Gew.-% bezogen auf die insgesamt vorhandenen C12- bis C24-Fettsäuren und einen Gehalt von einfach ungesättigter Fettsäure im Bereich von 40 Gew.-% bis 60 Gew.-% bezogen auf die insgesamt vorhandenen C12- bis C24-Fettsäuren aufweist und wobei S eine gesättigte Fettsäure mit 12 bis 24 Kohlenstoffatomen ist, O Ölsäure ist und L Linolsäure ist und die Fettmischung aus 10 bis 25 Gew.-% Rapsöl und 75 bis 90 Gew.-% eines umgeesterten Palmöloleins besteht.

2. Zusammensetzung nach Anspruch 1, wobei die Fettmischung 14 bis 20 Gew.-% SOO bezogen auf das Gesamtgewicht von vorhandenen Triglyceriden umfasst.

3. Zusammensetzung nach Anspruch 1 oder 2, wobei der Gehalt der gesättigten Fettsäure (*saturated fatty acid -* SAFA) der Zusammensetzung weniger als 40 Gew.-% ausmacht.

4. Zusammensetzung nach einem der vorhergehenden Ansprüche, wobei die Fettmischung Folgendes aufweist: einen N10 von mehr als 35, einen N20 von mehr als 20, einen N25 von weniger als 16 und einen N30 von weniger als 12.

5. Zusammensetzung nach einem der vorhergehenden Ansprüche, wobei die Fettmischung einen N20 von 20 bis 30 aufweist.

6. Zusammensetzung nach einem der vorhergehenden Ansprüche, wobei die Fettmischung Palmitinsäure in einer Menge von mehr als 32 Gew.-% und Stearinsäure in einer Menge von 3,5 bis 5 Gew.-% bezogen auf die insgesamt vorhandenen C12- bis C24-Fettsäuren umfasst.

7. Zusammensetzung nach einem der vorhergehenden Ansprüche, wobei der Zucker in der Zusammensetzung in einer Menge von 30 bis 70 Gew.-% vorhanden ist.

8. Zusammensetzung nach einem der vorhergehenden Ansprüche, wobei die Fettmischung in der Zusammensetzung in einer Menge von 20 bis 45 Gew.-% vorhanden ist.

9. Zusammensetzung nach einem der vorhergehenden Ansprüche, die ferner Kakaopulver umfasst.

10. Zusammensetzung nach einem der vorhergehenden Ansprüche, wobei das Palmölolein eine lodzahl (*iodine value -* IV) von 45 bis 65 aufweist.

11. Glasiertes oder überzogenes essbares Produkt, umfassend ein Basisprodukt und eine Glasur oder einen Überzug, wobei die Glasur oder der Überzug eine Zusammensetzung nach einem der Ansprüche 1 bis 10 ist und wobei das essbare Produkt vorzugsweise ein gebackenes Süßwarenprodukt, beispielsweise ausgewählt aus Plätzchen, Keksen und Kuchen, ist.

12. Verwendung einer Zusammensetzung nach einem der Ansprüche 1 bis 10 als eine Glasur oder ein Überzug auf einem essbaren Produkt und wobei das essbare Produkt vorzugsweise ein gebackenes Süßwarenprodukt, beispielsweise ausgewählt aus Plätzchen, Keksen und Kuchen, ist.

13. Verfahren zum Herstellen einer Glasur- oder Überzugzusammensetzung nach einem der Ansprüche 1 bis 10, das das Mischen des Zuckers und der Fettmischung bei einer Temperatur von 45 bis 100 °C und das Verfeinern der Mischung umfasst.

14. Verfahren zum Ausbilden einer Glasur oder eines Überzugs auf einem essbaren Produkt, das das Aufbringen der Zusammensetzung nach einem der Ansprüche 1 bis 10 bei einer Temperatur von 40 bis 60 °C auf das essbare Produkt umfasst.

## Revendications

1. Composition de glaçage ou d'enrobage pour produits comestibles comprenant au moins 30 % en poids de sucre et au moins 20 % en poids d'un mélange de matières grasses, dans laquelle le mélange de matières grasses comprend de 12 à 25 % en poids de SOO et de 7 à 15 % en poids de SOL sur la base du poids total des triglycérides présents, et le mélange de matières grasses a une teneur en acides gras saturés inférieure à 45 % en poids sur la base des acides gras C12 à C24 totaux présents et une teneur en acides gras monoinsaturés dans la plage de 40 % à 60 % sur la base des acides gras C12 à C24 totaux présents, et dans laquelle S est un acide gras saturé ayant de 12 à 24 atomes de carbone, O est l'acide oléique et L est l'acide linoléique, et le mélange de matières grasses est constitué de 10 à 25 % en poids d'huile de colza et de 75 à 90 % en poids d'oléine d'huile de palme interestérifiée.

2. Composition selon la revendication 1, dans laquelle le mélange de matières grasses comprend de 14 à 20 % en poids de SOO sur la base du poids total des triglycérides présents.

3. Composition selon la revendication 1 ou la revendication 2, dans laquelle la teneur en acides gras saturés (SAFA) de la composition est inférieure à 40 % en poids.

4. Composition selon l'une quelconque des revendications précédentes, dans laquelle le mélange de matières grasses a un ou plusieurs parmi : un N10 supérieur à 35, un N20 supérieur à 20, un N25 inférieur à 16 et un N30 inférieur à 12.

5. Composition selon l'une quelconque des revendications précédentes, dans laquelle le mélange de matières grasses a un N20 de 20 à 30.

6. Composition selon l'une quelconque des revendications précédentes, dans laquelle le mélange de matières grasses comprend de l'acide palmitique en une quantité supérieure à 32 % en poids et de l'acide stéarique en une quantité de 3,5 à 5 % en poids, sur la base des acides gras C12 à C24 totaux présents.

7. Composition selon l'une quelconque des revendications précédentes, dans laquelle le sucre est présent dans la composition en une quantité de 30 à 70 % en poids.

8. Composition selon l'une quelconque des revendications précédentes, dans laquelle le mélange de matières grasses est présent dans la composition en une quantité de 20 à 45 % en poids.

9. Composition selon l'une quelconque des revendications précédentes, qui comprend en outre de la poudre de cacao.

10. Composition selon l'une quelconque des revendications précédentes, dans laquelle l'oléine d'huile de palme a un indice d'iode (IV) de 45 à 65.

11. Produit comestible glacé ou enrobé comprenant un produit de base et un glaçage ou un enrobage, dans lequel le glaçage ou l'enrobage est une composition telle que définie dans l'une quelconque des revendications 1 à 10, et dans lequel le produit comestible est de préférence un produit de confiserie cuit au four, par exemple sélectionné parmi les biscuits, les cookies et les gâteaux.

12. Utilisation d'une composition telle que définie dans l'une quelconque des revendications 1 à 10 en tant que glaçage ou enrobage sur un produit comestible, et dans laquelle le produit comestible est de préférence un produit de confiserie cuit au four, par exemple sélectionné parmi les biscuits, les cookies et les gâteaux.

13. Procédé de fabrication d'une composition de glaçage ou d'enrobage telle que définie dans l'une quelconque des revendications 1 à 10, qui comprend le mélange du sucre et du mélange de matières grasses à une température de 45 à 100 °C et l'affinage du mélange.

14. Procédé de formation d'un glaçage ou d'un enrobage sur un produit comestible, qui comprend l'application sur le produit comestible de la composition selon l'une quelconque des revendications 1 à 10 à une température de 40 à 60 °C.
